# EUROPÄISCHE PATENTSCHRIFT

(11) **EP 1 231 124 B1**
(45) Veröffentlichungstag und Bekanntmachung des Hinweises auf die Patenterteilung: **13.10.2004**
(21) Anmeldenummer: 02003047.4
(22) Anmeldetag: 12.02.2002
(51) Int. Cl.: B62B 1/18

(54) **Schubkarre mit beweglicher Transportwanne**
Wheelbarrow with a mobile hopper
Brouette avec un baquet mobile

(30) Priorität: 12.02.2001 DE 10106405
(43) Veröffentlichungstag der Anmeldung: 14.08.2002
(73) Patentinhaber: Künast, Wilhelm, 81476 München (DE)
(72) Erfinder: Künast, Wilhelm, 81476 München (DE)
(74) Vertreter: Prüfer, Lutz H., Dipl.-Phys.

(56) Entgegenhaltungen:
- DE-C- 151 529
- FR-A- 734 075
- FR-A- 802 908
- FR-A- 1 430 572
- US-A- 469 265
- US-A- 2 234 879

## Beschreibung

Die Erfindung betrifft eine Schubkarre nach dem Oberbegriff des Patentanspruches 1.

Ein Nachteil beim Einsatz einer Schubkarre ist das kräfteverschleißende Anheben der Last beim Transport der Last, insbesondere über längere Entfernungen.

Die US 469,265 offenbart eine Schubkarre mit einem Traggestell aus zwei im wesentlichen geraden Trägern, die an ihrem einen Ende an der Radachse der Schubkarre befestigt sind und an ihrem anderen Ende zwei Traggriffe aufweisen. Zur Verringerung der Last beim Transport ist die Wanne nicht starr auf den Trägern befestigt, sondern kann sich beim anheben der Schubkarre auf einem Schienenpaar bewegen. Die Schienen sind jeweils an einem Punkt auf den Trägern zwischen der Radachse und den Traggriffen drehbar gelagert, von wo aus sie sich in Richtung der Traggriffe erstrecken. Dabei kann der Winkel zwischen den Schienen und den Trägern eingestellt werden.

Diese Schubkarre bringt zwar eine gewisse Erleichterung beim Transport der Last mit sich, dennoch ist beim Transport der Schwerpunkt der Last immer noch in einem großen Abstand zur Radachse angeordnet.

Aufgabe der vorliegenden Erfindung ist es, eine Schubkarre zur Verfügung zu stellen, bei der der Kraftaufwand beim Transport der Ladung erheblich reduziert ist.

Diese Aufgabe wird durch die in Patentanspruch 1 gekennzeichnete Schubkarre gelöst.

Weiterbildungen der Erfindung sind in den Unteransprüchen gekennzeichnet.

Weitere Merkmale und Zweckmäßigkeiten der Erfindung ergeben sich aus der Beschreibung von Ausführungsbeispielen anhand der Figuren. Von den Figuren zeigen:
Fig. 1 eine Seitenansicht einer ersten Ausführungsform der Schubkarre in der Position zum Laden;
Fig. 2 eine Seitenansicht einer ersten Ausführungsform der Schubkarre in der Position zum Transportieren;
Fig. 3 eine Schnittdarstellung der Schubkarre längs einer in Fig. 2 gezeigten Geraden A - A;
Fig. 4 eine vergrößerte Darstellung des in Fig. 3 gekennzeichneten Details B;
Fig. 5 eine vergrößerte Darstellung des in Fig. 1 gekennzeichneten Details C (Arretiervorrichtung);
Fig. 6 eine vergrößerte Darstellung des in Fig. 3 gekennzeichneten Details D einer zweiten Ausführungsform.
Fig. 7 eine Seitenansicht einer fünften Ausführungsform der Schubkarre in der Position zum Laden;
Fig. 8 eine Seitenansicht einer fünften Ausführungsform der Schubkarre in der Position zum Transportieren;
Fig. 9 eine vergrößerte Darstellung eines mit der Schiene zusammenwirkenden Laufrades bei der fünften Ausführungsform.

### Erste Ausführungsform

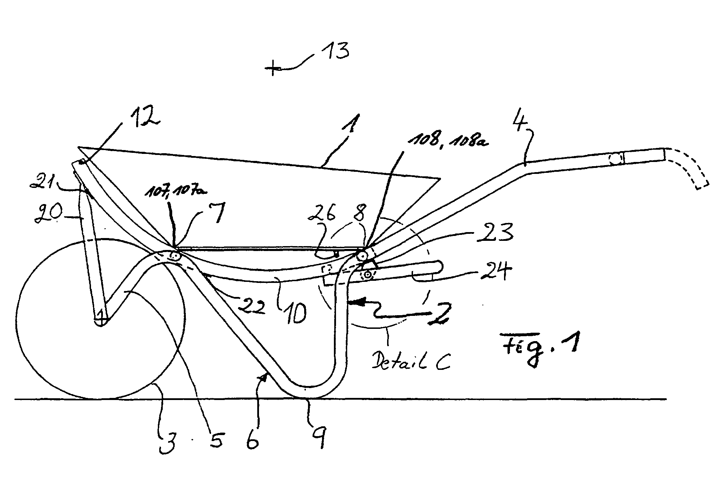

Die in Fig. 1 gezeigte Schubkarre weist eine lastaufnehmende Wanne 1, ein diese tragendes Traggestell 2, ein die Wanne über das Traggestell tragendes Rad 3 und Traggriffe 4 auf.

Das Traggestell 2 weist in an sich bekannter Weise einen ersten Abschnitt 5 zum Abstützen auf der Achse des Rades 3 und einen damit verbundenen bzw. einstückig ausgebildeten zweiten Abschnitt 6 auf. Der zweite Abschnitt 6 dient zur Aufnahme der Wanne 1 an ihrem dem Rad 3 zugewandten vorderen Bodenrand 7 und an dem diesem gegenüberliegenden rückwärtigen Bodenrand 8. Der die Wanne 1 am rückwärtigen Bodenrand 8 aufnehmende Abschnitt des Traggestelles ist mit den Tragegriffen 4 einstückig ausgebildet. Der zweite Abschnitt weist zwischen den vorderen Aufnahmestellen zur Aufnahme der Wanne 107, 107a und den hinteren Aufnahmestellen zur Aufnahme der Wanne 108, 108a einen zum Boden hin gebogenen Stellabschnitt 9 auf, auf dem die Schubkarre in der in Fig. 1 gezeigten Ladeposition auf dem Boden aufsteht.

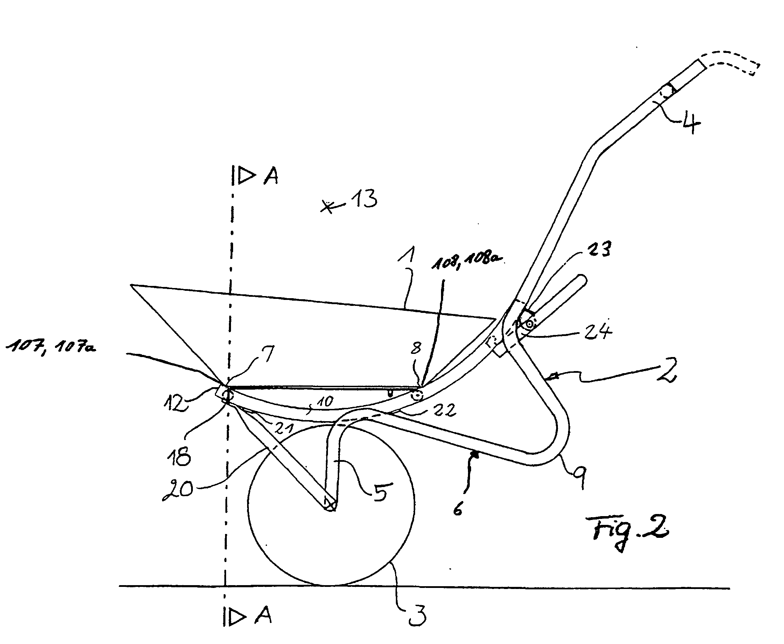

Wie aus den Figuren ersichtlich ist, weist das Traggestell 2 auf jeder Wannenseite eine zusätzliche Schiene 10, 11 auf. Wie am besten aus den Figuren 1 und 2 ersichtlich ist, erstrecken sich diese Schienen 10, 11 von der Stelle, an der in der in Fig. 1 gezeigten Ladeposition der rückwärtige Bodenrand 8 der Wanne 1 auf dem Traggestell ruht, über die Stelle, an der in der in Fig. 1 gezeigten Ladeposition der vordere Bodenrand 7 auf dem Traggestell ruht, bis zu einem freien Ende 12 hin. In dem gezeigten Ausführungsbeispiel sind die Schienen 10, 11 kreissegmentförmig ausgebildet, wobei der Mittelpunkt 13 des Kreissegmentes auf der dem Boden abgewandten bzw. der der Wanne 1 zugewandten Seite liegt.

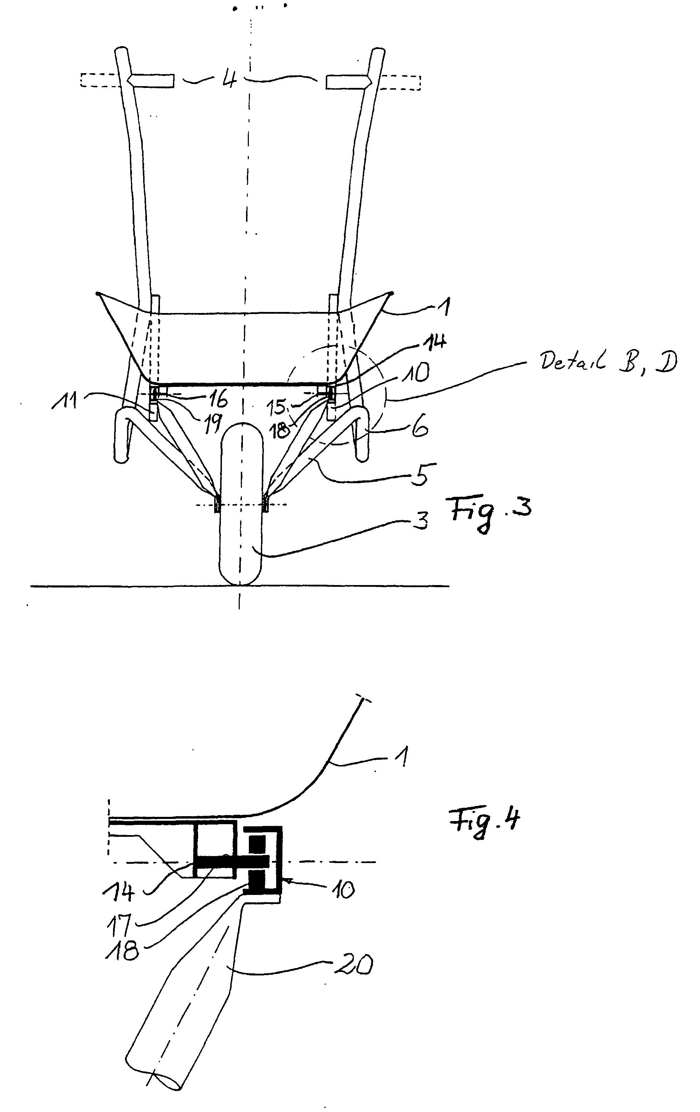

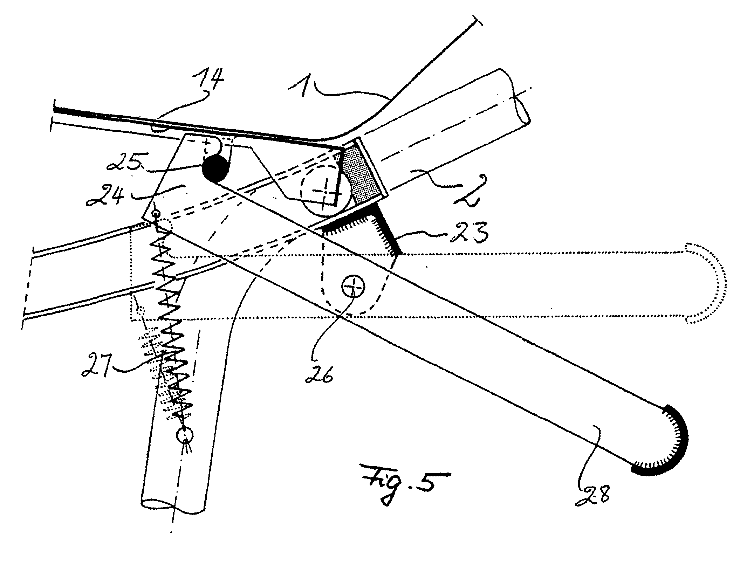

Wie am besten aus den Figuren 3 und 4 ersichtlich ist, weist die Wanne 1 an ihrer Unterseite einen mit der Wanne fest verbundenen Auflagerahmen 14 auf, der an seinen beiden Außenseiten ein über eine jeweilige Achse 17 getragenes Laufrad 18, 19 aufweist. Wie aus den Figuren 1 und 2 ersichtlich ist, sind entsprechende Achsen mit Laufrädern sowohl am vorderen Bodenrand 7 als auch am rückwärtigen Bodenrand 8 vorgesehen. Die Laufräder 18, 19 sind so angeordnet und ausgebildet, daß sie auf bzw. in den Schienen 10, 11 geführt und von diesen getragen werden.

Wie Fig. 4 am besten zeigt, sind in dem ersten Ausführungsbeispiel die Schienen U-förmig ausgebildet, wobei sie so ausgerichtet sind, daß die zwei das U bildenden Schenkel horizontal gerichtet sind und die Öffnung des jeweiligen U der gegenüberliegenden Schiene zugewandt ist. Auf diese Weise ist die Wanne 1 über die ganze Schienenlänge hin aus der in Fig. 1 gezeigten Ladeposition bis in die in Fig. 2 gezeigte Transportposition auf den Schienen hin und her fahrbar.

Die Länge des Schienenabschnittes von der in Fig. 1 gezeigten Position beim vorderen Bodenrand 7 bis zum freien Ende 12 hin ist so bemessen, daß die vorderen Laufräder 18, 19 gerade am freien Ende 12 angelangt sind, wenn die Wanne 1 aufgrund des Anhebens der Traggriffe 4 in die in Fig. 2 gezeigte Schiebe- bzw. Transportposition angehoben sind. Am freien Ende 12 ist ein nicht gezeigter Anschlag oder Puffer vorgesehen, gegen den die Räder 18, 19 gedämpft anschlagen. Wie aus Fig. 2 ersichtlich ist, ist die Länge so gewählt, daß in der in Fig. 2 gezeigten Transportposition die Wanne wiederum einen im wesentlichen horizontalen Wannenboden aufweist, wie auch in der in Fig. 1 gezeigten Ladeposition.

Der Radius des kreissegmentförmigen Abschnittes der Schienen wird so bestimmt, daß zunächst in der in Fig. 1 gezeigten Ladeposition auf dem Boden der Wanne auf dessen Mittelpunkt das Lot gebildet wird. Dann wird das entsprechende Lot auf dem Mittelpunkt des wiederum waagerecht stehenden Wannenbodens gemäß Fig. 2 gebildet. Der Schnittpunkt zwischen diesen beiden Loten bildet den Mittelpunkt 13 des Kreissegmentes und bestimmt damit dessen Radius.

Wie aus den Figuren 1 und 2 ersichtlich ist, ist zusätzlich zu dem ersten Abschnitt 5 eine Verstrebung 20 vorgesehen, die an ihrem einen freien Ende mit dem freien Ende 12 der Schiene und an ihrem anderen freien Ende mit der Achse des Rades 3 verbunden ist und somit das freie Ende der Schienen trägt.

Die beiden Schienen 10, 11 sind durch in den Figuren 1 und 2 angedeuteten Querverstrebungen 21, 22, 23 in einem festen Abstand und parallel zueinander gehalten. Wie am besten aus Fig. 5 ersichtlich ist, ist am Auflagerahmen 14 ein nach unten quer zu der Schienenrichtung sich erstreckender Bolzen 25 vorgesehen. Ferner ist eine sich parallel zur Schiene bzw. zum Traggestell 2 erstreckende Klinke 24 vorgesehen, die um eine Achse 26 schwenkbar an der Querverstrebung 23 befestigt ist. Die Länge zwischen Klinke und Achse 26 ist so gewählt, daß die Klinke genau dann mit dem Bolzen in Eingriff gelangt, wenn die Wanne 1 in der in Fig. 1 gezeigten Ladeposition steht. Dabei ist die Klinke 24 in der in Fig. 5 gezeigten Weise durch eine am Klinkenende angreifende Zugfeder 27 in eine von dem Wannenboden weg gerichtete Position vorgespannt und wird zum Arretieren über einen Handgriff 28 zu dem Bolzen hin bewegt.

Im Betrieb wird die Schubkarre zunächst in die in Fig. 1 gezeigte Ladestellung bewegt und beladen. Der Schwerpunkt der Last liegt somit zwischen der Radachse des Rades 3 und dem Stellabschnitt 9. Zum Bewegen wird das Paar Traggriffe 4 in die in Fig. 2 gezeigte angehobene Stellung bewegt, was zur Folge hat, daß die Wanne 1 mit ihrer Last aufgrund des Eigengewichtes bis zum Anschlag 12 hin fährt mit dem Ergebnis, daß der Schwerpunkt der Last jetzt im wesentlichen über der Achse des Rades 3 liegt. Zum Schieben der Schubkarre muß die Bedienungsperson also lediglich noch die Reibung überwinden, muß aber nicht die Last tragen. Nach dem Befördern und vor dem Ausschütten wird die Schubkarre wieder in die in Fig. 1 gezeigte Position abgestellt. Dann erfolgt das Verriegeln in der in Fig. 5 gezeigten Weise durch Einklinken zwischen Klinke und Bolzen. Anschließend kann die Entleerung in der üblichen Weise wie bei einer klassischen Schubkarre erfolgen. Vor dem nächsten Transport wird die Klinkenverbindung wieder gelöst, so daß der Vorgang sich wiederholt.

Durch Verlagerung des Bolzens 25 kann die Wanne (1) auch in anderen Positionen relativ zum Traggestell als der in Fig. 1 gezeigten Ladeposition arretiert werden.

Weiterhin sind in dem oben beschriebenen Ausführungsbeispiel die Schienen als U-förmige Profile beschrieben. Es sind jedoch auch andere Profile anwendbar.

Bei der Schubkarre der ersten Ausführungsform liegt der Schwerpunkt der Last in der Transportposition im wesentlichen über der Achse des Rades 3. Da sich die Wanne 1 kontinuierlich auf den Schienen bewegen kann, kann die Lage der Wanne 1 während des Transportes durch Heben und Senken der Tragegriffe 4 stufenlos verändert werden. Dies führt beispielsweise dazu, daß auch bei Steigungen der Schwerpunkt der Last durch leichtes Absenken der Tragegriffe 4 im wesentlichen über die Achse des Rades 3 gelegt werden kann.

### Zweite Ausführungsform

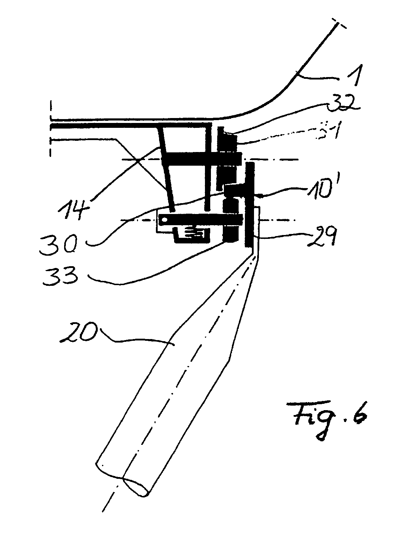

In Fig. 6 ist eine zweite Ausführungsform beschrieben. Die zweite Ausführungsform unterscheidet sich von der ersten Ausführungsform darin, daß die Schienen 10' ein T-förmiges Profil aufweisen. Dabei erstreckt sich der "Querstrich" 29 des T vertikal, während der "Basisstrich" 30 sich horizontal erstreckt. Der Abschnitt 30 bildet die Lauffläche für die den Laufrädern 18, 19 entsprechenden Laufräder 31. Die Laufräder 31 sind mit einem Spurkranz 32 auf der dem Abschnitt 29 abgewandten Seite des Laufrades 31 versehen. Wie aus Fig. 6 ersichtlich ist, ist ferner ein zweites Rad 33 vorgesehen, welches mit einer entsprechenden Achse in der gleichen Ebene wie das Laufrad 31 geführt wird und welches auf der dem Laufrad 31 abgewandten Seite des Elementes 30 liegt. Die Achse ist so federvorgespannt, daß das zweite Rad 33 beim Aufliegen des Laufrades 31 auf dem Element 30 von unten gegen das Element 30 drückt, so daß das so gebildete Radpaar aus den Rädern 31 und 32 stabil auf dem Abschnitt 30 des T-förmigen Profils der Schienen läuft. Es sind dann alle vier Räder als entsprechende Radpaare ausgebildet.

### Dritte Ausführungsform

Eine dritte Ausführungsform unterscheidet sich von der ersten Ausführungsform darin, daß das Schienenpaar mit einem L-förmigen Querschnitt ausgebildet ist.

### Vierte Ausführungsform

Eine vierte Ausführungsform unterscheidet sich von der ersten Ausführungsform darin, daß die Schienen aus Rohren geformt, auf denen die Räder laufen.

### Fünfte Ausführungsform

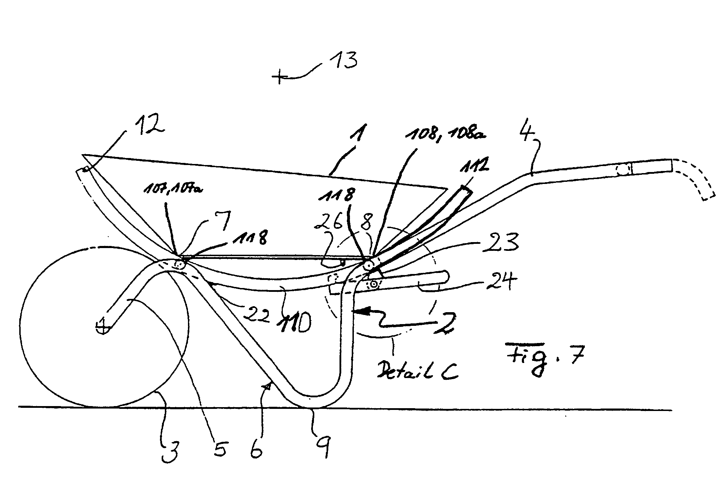

Die in den Figuren 7 bis 9 gezeigte fünfte Ausführungsform unterscheidet sich von der ersten Ausführungsform darin, daß das Schienenpaar (110, 111) nicht am Traggestell 2, sondern an der Wanne (1) angebracht ist. Ein weiterer Unterschied besteht darin, daß die Laufräder (18, 19) nicht an der Wanne (1) angebracht sind. Stattdessen weist das Traggestell (2) an den vier Aufnahmestellen der Wanne 107, 107a, 108, 108a jeweils ein über eine jeweilige Achse 117 getragenes Laufrad 118 auf. Die Laufräder 118 sind so angeordnet und ausgebildet, daß sie in den Schienen 110, 111 geführt werden bzw. die Schienen 110, 111 auf ihnen aufliegen und die Schienen von den Laufrädern getragen werden.

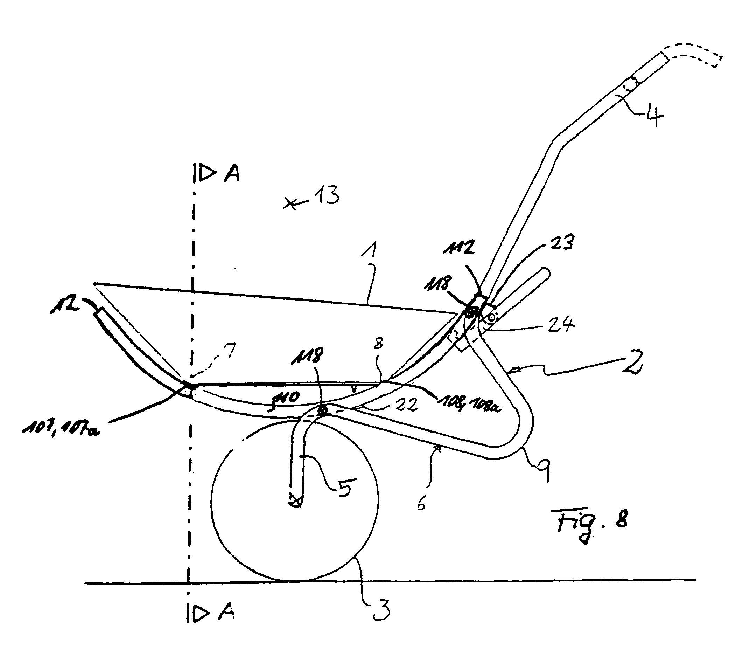

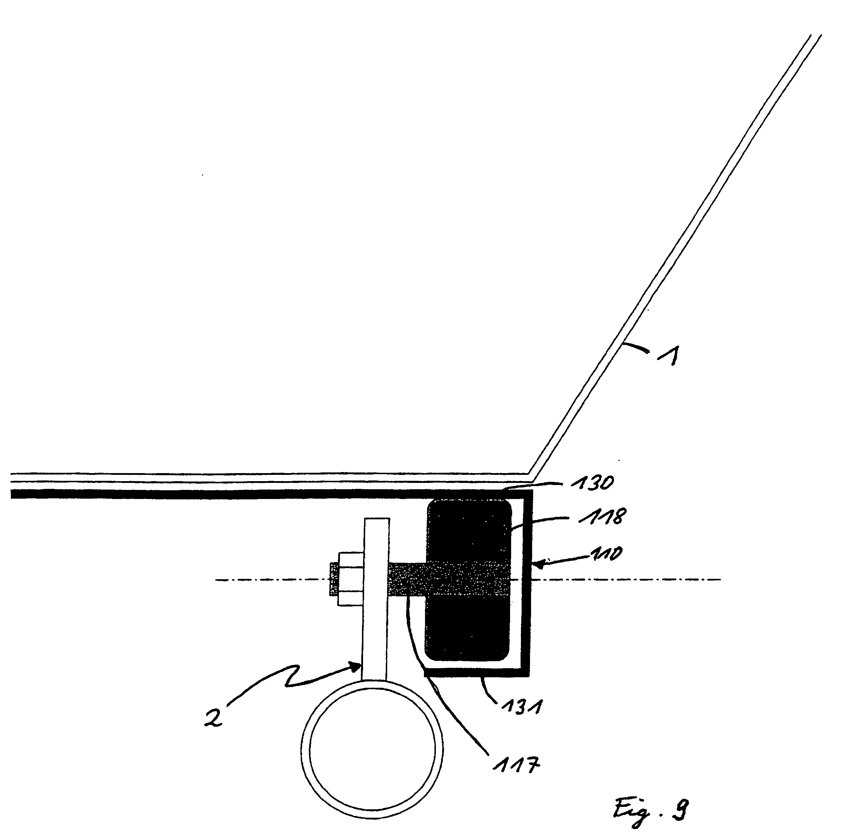

Wie Fig. 9 am besten zeigt, sind in dem fünften Ausführungsbeispiel die Schienen U-förmig ausgebildet, wobei sie so ausgerichtet sind, daß die zwei das U bildenden Schenkel 130, 131 horizontal gerichtet sind und die Öffnung des jeweiligen U der gegenüberliegenden Schiene zugewandt ist. Auf diese Weise ist die Wanne 1 mit den Schienen über die ganze Schienenlänge hinweg aus der in Fig. 7 gezeigten Ladeposition bis in die in Fig. 8 gezeigte Transportposition und wieder zurück bewegbar.

Die Länge der Schienenabschnitte von den in Fig. 7 gezeigten hinteren Aufnahmestellen 108, 108a bis zu den hinteren freien Enden 112 hin ist so bemessen, daß die hinteren freien Enden 112 gerade an den hinteren Laufrädern 118 angelangt sind, wenn die Wanne 1 aufgrund des Anhebens der Traggriffe 4 in die in Fig. 8 gezeigte Schiebe- bzw. Transportposition angehoben ist. Am hinteren freien Ende 112 ist ein nicht gezeigter Anschlag oder Puffer vorgesehen, gegen den die Räder 118 gedämpft anschlagen. Wie aus Fig. 8 ersichtlich ist, ist die Länge der Schienen so gewählt, daß in der in Fig. 8 gezeigten Transportposition die Wanne wiederum einen im wesentlichen horizontalen Wannenboden aufweist, wie auch in der in Fig. 7 gezeigten Ladeposition.

In dem gezeigten Ausführungsbeispiel sind die Schienen 110, 111 kreissegmentförmig ausgebildet, wobei der Mittelpunkt 13 des Kreissegmentes auf der dem Boden abgewandten bzw. der der Wanne 1 zugewandten Seite liegt.

Der Radius des kreissegmentförmigen Abschnittes der Schienen wird so bestimmt, daß zunächst in der in Fig. 7 gezeigten Ladeposition auf dem Boden der Wanne auf dessen Mittelpunkt das Lot gebildet wird. Dann wird das entsprechende Lot auf dem Mittelpunkt des wiederum waagerecht stehenden Wannenbodens gemäß Fig. 8 gebildet. Der Schnittpunkt zwischen diesen beiden Loten bildet den Mittelpunkt 13 des Kreissegmentes und bestimmt damit dessen Radius.

Wie bei der ersten Ausführungsform kann eine Klinkenverbindung zum wahlweisen Feststellen der Wannenposition gegenüber dem Traggestell in der in fig. 7 gezeigten Ladeposition vorgesehen werden.

In dem oben beschriebenen Ausführungsbeispiel sind die Schienen als U-förmige Profile beschrieben. Es sind jedoch auch andere Profile, beispielsweise ein T-Profil oder ein L-Profil, anwendbar. Insbesondere können wie bei der zweiten Ausführungsform alle vier Räder als Radpaare ausgebildet werden.

Weiterhin kann auch eine andere Schienenlänge, als die in diesem Ausführungsbeispiel vorgeschlagene gewählt werden.

Ferner kann die Wanne so geformt sein, daß sie sich mit ihrem Boden und ihren Seitenwänden an das Schienenprofil anschmiegt.

### Sechste Ausführungsform

Eine sechste Ausführungsform ist zu der fünften Ausführungsform identisch bis auf die Tatsache, daß der untere Abschnitt 131 des U-förmigen Schienenprofils weggelassen wird.

### Siebte Ausführungsform

Eine siebte Ausführungsform ist zu der fünften Ausführungsform identisch bis auf die Tatsache, daß der untere Abschnitt 131 des U-förmigen Schienenprofils kürzer ist als der obere Abschnitt 130.

### Achte Ausführungsform

Eine achte Ausführungsform ist zu der fünften Ausführungsform identisch bis auf die Tatsache, daß der untere Abschnitt 131 des U-förmigen Schienenprofils an seinem an den senkrechten Abschnitt angrenzenden Ende einen kleineren Abstand zu dem Abschnitt 130 aufweist als an seinem entgegengesetzten Ende.

Bei der fünften bis achten Ausführungsform ergibt sich der zusätzliche Vorteil, daß sich in den Schienen ablagernde Verunreinigungen die Schienen nach unten verlassen können.

## Patentansprüche

1. Schubkarre mit einem Traggestell (2), einem Rad (3) und zwei Tragegriffen (4) und einer von dem Traggestell getragenen Wanne (1) zum Aufnehmen von zu transportierender Last, **dadurch gekennzeichnet, daß** die Schubkarre zwei Schienen (10, 11, 110, 111) aufweist, mittels derer die Wanne (1) so gehalten ist, daß sie relativ zum Traggestell (2) aus einer ersten Position zum Laden in eine zweite Position zum Transportieren bewegbar ist, **dadurch gekennzeichnet, daß** sich die den Tragegriffen (4) abgewandten Enden (12) der Schienen (10, 11, 110, 111) oberhalb des Rades befinden.

2. Schubkarre nach Anspruch 1, **dadurch gekennzeichnet, daß** das Traggestell (2) das Schienenpaar zum Führen der Bewegung der Wanne aufweist.

3. Schubkarre nach Anspruch 2, **dadurch gekennzeichnet, daß** die Wanne (1) auf jeder Seite Laufräder (18, 19; 31, 33) bzw. Rollen aufweist, die auf den Schienen formschlüssig geführt sind.

4. Schubkarre nach einem der Ansprüche 2 oder 3, **dadurch gekennzeichnet, daß** die Schienen (10, 10', 11, 110, 111) an ihren den Tragegriffen (4) abgewandten Enden (12) einen Anschlag zum Begrenzen der Wannenbewegung aufweisen.

5. Schubkarre nach einem der Ansprüche 2 bis 4, **dadurch gekennzeichnet, daß** die Schienen (10, 10', 11) an einem freien Ende (12) über Streben (20) auf der Radachse der Schubkarre abgestützt sind.

6. Schubkarre nach Anspruch 1, **dadurch gekennzeichnet, daß** die Wanne (1) das Schienenpaar zum Führen der Bewegung der Wanne aufweist.

7. Schubkarre nach Anspruch 6, **dadurch gekennzeichnet, daß** das Traggestell (2) auf jeder Seite Laufräder (118) bzw. Rollen aufweist, die auf den Schienen formschlüssig geführt sind.

8. Schubkarre nach Anspruch 6 oder 7, **dadurch gekennzeichnet, daß** die Schienen (110, 111) an ihren den Tragegriffen (4) zugewandten Enden (112) einen Anschlag zum Begrenzen der Wannenbewegung aufweisen.

9. Schubkarre nach einem der Ansprüche 2 bis 8, **dadurch gekennzeichnet, daß** das Profil der Schienen (10, 10', 11, 110, 111) einen sich vertikal erstreckenden Führungsabschnitt und einen sich horizontal erstreckenden Tragabschnitt aufweist.

10. Schubkarre nach Anspruch 6 oder 7, **dadurch gekennzeichnet, daß** das Profil der Schienen (110, 111) U-förmig ausgebildet ist und die Schienen so ausgerichtet sind, daß die beiden die Schenkel des U bildenden Abschnitte (130, 131) horizontal gerichtet sind.

11. Schubkarre nach Anspruch 10, **dadurch gekennzeichnet, daß** der untere Abschnitt 131 kürzer ist als der obere Abschnitt (130).

12. Schubkarre nach Anspruch 6 oder 7, **dadurch gekennzeichnet, daß** das Profil der Schienen einen vertikalen Führungsabschnitt aufweist, an dessen oberem Ende sich ein horizontal gerichteter Tragabschnitt (130) anschließt und an dessen unterem Ende sich ein Abschnitt anschließt, der an seinem an den senkrechten Führungsabschnitt angrenzenden Ende einen kleineren Abstand zu dem oberen horizontalen Tragabschnitt (130) aufweist als an seinem entgegengesetzten Ende.

13. Schubkarre nach einem der Ansprüche 6 bis 8 oder 10 bis 12, **dadurch gekennzeichnet, daß** sich der Boden der Wanne und ihre Seitenwände an das Schienenpaar anschmiegen und die Enden des Schienenpaares nicht über den Wannenrand hinausragen.

14. Schubkarre nach einem der Ansprüche 1 bis 13, **dadurch gekennzeichnet, daß** eine Arretierungseinrichtung (24, 25) zum Fixieren der Wanne (1) relativ zu dem Traggestell (2) vorgesehen ist.

15. Schubkarre nach Anspruch 14, **dadurch gekennzeichnet, daß** die Fixierung in der Ladestellung der Wanne (1) erfolgt.

16. Schubkarre nach einem der Ansprüche 2 bis 15, **dadurch gekennzeichnet, daß** die Schienen (10, 10', 11, 110, 111) des Schienenpaares durch Querverstrebungen (21, 22, 23)in einem festen Abstand und parallel zueinander gehalten sind.

17. Schubkarre nach einem der Ansprüche 1 bis 16, **dadurch gekennzeichnet, daß** die Wanne stufenlos bewegbar ist.

## Claims

1. Wheelbarrow comprising a supporting structure (2), a wheel (3) and two carrying handles (4) as well as a trough (1) supported by said supporting structure for receiving a load to be transported, **characterised in that** the wheelbarrow comprises two rails (10, 11, 110, 111) by means of which said trough (1) is held in such a way that it can be moved relative to said supporting structure (2) from a first position for loading into a second position for transportation, **characterised in that** the ends (12) of said rails (10, 11, 110, 111 ), which are turned way from said carrying handles, are located above said wheel.

2. Wheelbarrow according to Claim 1, **characterised in that** said supporting structure (2) comprises said pair of rails for guiding the movement of said trough.

3. Wheelbarrow according to Claim 2, **characterised in that** said trough (1) comprises carrying wheels (18, 19; 31, 33) or rollers, respectively, on each side, which are guided on said rails with a positive fit.

4. Wheelbarrow according to any of the Claims 2 or 3, **characterised in that** said rails (10, 10', 11, 110, 111) comprise a stop on their ends (12) turned away from said carrying handles (4), for restricting the movement of said trough.

5. Wheelbarrow according to any of the Claims 2 to 4, **characterised in that** said rails (10, 10', 11) are supported on the wheel axle of the wheelbarrow via braces (20) on a free end (12).

6. Wheelbarrow according to Claim 1, **characterised in that** said trough (1) comprises said pair of rails for guiding the movement of said trough.

7. Wheelbarrow according to Claim 6, **characterised in that** said supporting structure (2) comprises carrying wheels (118) or rollers, respectively, on each side, which are guided on said rails with a positive fit.

8. Wheelbarrow according to Claim 6 or 7, **characterised in that** said rails (110, 111) comprise a stop on their ends (112) facing said carrying handles (4), for restricting the movement of said trough.

9. Wheelbarrow according to any of the Claims 2 to 8, **characterised in that** the section of said rails (10, 10', 11, 110, 111) includes a vertically extending guiding section and a horizontally extending carrying section.

10. Wheelbarrow according to Claim 6 or 7, **characterised in that** the section of said rails (110, 111) presents a U-shaped configuration and that said rails are so oriented that the two sections (130, 131 ) constituting the branches of said U-shape are horizontally oriented.

11. Wheelbarrow according to Claim 10, **characterised in that** the lower section (131) is shorter than the upper section (130).

12. Wheelbarrow according to Claim 6 or 7, **characterised in that** the section of said rails includes a vertical guiding section having an upper end that is joined by a horizontally oriented supporting section (130) and a lower end joined by a section that is spaced from said upper horizontal supporting section (130), on its end joining said vertical guiding section, by a distance that is smaller than the distance on its opposite end.

13. Wheelbarrow according to any of the Claims 6 to 8 or 10 5o 12, **characterised in that** the bottom of said trough and its side walls conform to said pair of rails whilst the ends of said pair of rails do not project beyond the edge of said trough.

14. Wheelbarrow according to any of the Claims 1 to 13, **characterised in that** a locking means (24, 25) is provided for fixing said trough (1) relative to said supporting structure (2).

15. Wheelbarrow according to Claim 14, **characterised in that** the fixation is carried out with the trough (1) in its loading position.

16. Wheelbarrow according to any of the Claims 2 to 15, **characterised in that** said rails (10, 10', 11, 110, 111) of said pair of rails are held by transverse braces (21, 22, 23) at a fixed spacing and in parallel relative to each other.

17. Wheelbarrow according to any of the Claims 1 to 16, **characterised in that** said trough is progressively mobile.

## Revendications

1. Brouette comprenant une structure de support (2), une roue (3) et deux manches de saisie (4) ainsi qu'une cuve (1 ) portée par ladite structure de support afin de recevoir une charge à transporter, **caractérisée en ce que** la brouette comprend deux ornières (10, 11, 110, 111) moyennant lesquelles ladite cuve (1) est maintenue d'une telle manière, qu'elle se puisse mouvoir relativement à ladite structure de support (2) d'une première position chargement en une deuxième position de transport, **caractérisée en ce que** les extrémités (12) desdites ornières (10, 11, 110, 111), qui sont opposées auxdits manches de saisie, se trouvent au-dessus de ladite roue.

2. Brouette selon la revendication 1, **caractérisée en ce que** ladite structure de support (2) comprend ladite paire d'ornières pour le guidage du mouvement de ladite cuve.

3. Brouette selon la revendication 2, **caractérisée en ce que** ladite cuve (1) comprend des roues porteuses (18, 19; 31, 33) ou respectivement des molettes, de chaque côté, qui sont guidées sur lesdites ornières à fermeture géométrique.

4. Brouette selon une quelconque des revendications 2 ou 3, **caractérisée en ce que** lesdites ornières (10, 10', 11, 110, 111 ) comprennent une butée à leurs extrémités (12) opposées auxdits manches de saisie (4), à limiter le mouvement de ladite cuve.

5. Brouette selon une quelconque des revendications 2 à 4, **caractérisée en ce que** lesdites ornières (10, 10', 11) sont appuyées sur l'essieu de la roue de la brouette via des entretoises (20) à une extrémité libre (12).

6. Brouette selon la revendication 1, **caractérisée en ce que** ladite cuve (1) comprend ladite paire of ornières pour le guidage du mouvement de ladite cuve.

7. Brouette selon la revendication 6, **caractérisée en ce que** ladite structure de support (2) comprend des roues porteuses (118) ou respectivement molettes de chaque côté, qui sont guidées sur lesdites ornières à fermeture géométrique.

8. Brouette selon la revendication 6 ou 7, **caractérisée en ce que** lesdites ornières (110, 111) comprennent une butée à leurs extrémités (112) en face desdits manches de saisie (4), à limiter le mouvement de ladite cuve.

9. Brouette selon une quelconque des revendications 2 à 8, **caractérisée en ce que** le profil desdites ornières (10, 10', 11, 110, 111) renferme un tronçon de guidage, qui s'étend en sens vertical, et un tronçon porteur, qui s'étend en sens horizontal.

10. Brouette selon la revendication 6 ou 7, **caractérisée en ce que** le profil desdites ornières (110, 111) présente une configuration en U, et **en ce que** lesdites ornières sont orientées d'une telle façon, que les deux tronçons (130, 131), qui constituent les branches de ladite forme en U, soient orientés en sens horizontal.

11. Brouette selon la revendication 10, **caractérisée en ce que** la partie inférieure (131) est plus courte que la partie supérieure (130).

12. Brouette selon la revendication 6 ou 7, **caractérisée en ce que** le profil desdites ornières renferme un tronçon de guidage vertical, à son extrémité supérieure étant jointe par un tronçon d'appui orienté en sens horizontal (130) et à une extrémité inférieure étant jointe par un tronçon écarté dudit tronçon supérieur d'appui horizontal (130), à son extrémité, qui se joigne audit tronçon de guidage vertical, par une distance plus petite que la distance à son extrémité opposée.

13. Brouette selon une quelconque des revendications 6 à 8 ou 10 à 12, **caractérisée en ce que** le fond de ladite cuve et ses parois latérales s'épousent à ladite paire d'ornières, pendant que les extrémités de ladite paire d'ornières ne font pas saillie du bord de ladite cuve.

14. Brouette selon une quelconque des revendications 1 à 13, **caractérisée en ce qu'**un moyen d'arrêt (24, 25) est pourvu afin de fixer ladite cuve (1) relativement à ladite structure de support (2).

15. Brouette selon la revendication 14, **caractérisée en ce que** la fixation se fait quand ladite cuve (1) se trouve en sa position de chargement.

16. Brouette selon une quelconque des revendications 2 à 15, **caractérisée en ce que** lesdites ornières (10, 10', 11, 110, 111 ) de ladite paire d'omières sont maintenues par des entretoises transversales (21, 22, 23) à un écart non variable et l'une en parallèle à l'autre.

17. Brouette selon une quelconque des revendications 1 to 16, **caractérisée en ce que** ladite cuve est progressivement mobile.
